# EUROPÄISCHE PATENTSCHRIFT

(11) **EP 2 565 431 B1**
(45) Veröffentlichungstag und Bekanntmachung des Hinweises auf die Patenterteilung: **24.10.2018**
(21) Anmeldenummer: 12168273.6
(22) Anmeldetag: 16.05.2012
(51) Int. Cl.: F02D 41/22, F02D 19/02, F02D 41/00, F02M 21/02, F02D 41/04

(54) **Verfahren zur Überwachung von in Gaszufuhrleitungen eines Gasmotors angeordneten Rückschlagventilen**
Method for monitoring non-return valves in gas supply lines of a gas motor
Procédé de surveillance de clapets anti-retour placés dans les conduites d'alimentation en gaz d'un moteur à gaz

(30) Priorität: 31.08.2011 DE 102011081928
(43) Veröffentlichungstag der Anmeldung: 06.03.2013
(73) Patentinhaber: MAN Diesel & Turbo SE, 86153 Augsburg (DE)
(72) Erfinder: Stoll, Sascha, 86679 Ellgau (DE); Wilke, Ingo, 82327 Tutzing (DE)

(56) Entgegenhaltungen:
- WO-A-2007/042388
- DE-A1-102007 002 752
- JP-A- 2003 003 909
- US-A- 5 632 250
- US-B1- 6 467 466

## Beschreibung

Die vorliegende Erfindung betrifft ein Verfahren zur Überwachung von in Gaszufuhrleitungen eines Gasmotors angeordneten Rückschlagventilen mechanischer oder elektronischer Art nach dem Oberbegriff des Anspruchs 1. Die Erfindung betrifft darüber hinaus auch die Verwendung des Verfahrens nach dem Oberbegriff des Anspruchs 7.
In Gaszufuhrleitungen, welche zu einer Vorkammer eines Gasmotors führen, wird in der Regel, direkt benachbart zur Vorkammer, ein druckgesteuertes Rückschlagventil verbaut. Ist der Druck auf der von der Vorkammer abgewandten Seite des Rückschlagventils größer als der Druck auf der, der Vorkammer zugewandten Seite - dieser Druck entspricht im wesentlichen dem Druck in der Vorkammer - so hält eine aufgrund der Druckdifferenz vorherrschende Druckkraft das Rückschlagventil geöffnet, meistens entgegen der Wirkung einer Federkraft. Der Strömungsquerschnitt der Gasleitung ist damit freigegeben, und es wird Gas in die Vorkammer befördert.
Übersteigt jedoch die Summenkraft aus Federkraft und der vom Gasdruck auf der, der Vorkammer zugewandten Seite ausgeübten Kraft die vom Gasdruck auf der von der Vorkammer abgewandten Seite ausgeübte Kraft, so schließt das Rückschlagventil, und das Rückströmen von Fluid in die Gaszufuhrleitung wird verhindert. Diese Situation stellt sich beim Kompressionstakt des Gasmotors ein. Der sich in der Hauptbrennkammer einstellende Kompressionsdruck setzt sich in die Vorkammer fort, und das Rückschlagventil wird von der sich einstellenden Druckkraft geschlossen. Ein Rückströmen von Gas in die Gaszufuhrleitung wird damit verhindert.
Rückschlagventile sind während des Betriebs eines Gasmotors hohen thermischen und mechanischen Belastungen ausgesetzt und weisen deshalb einen hohen Verschleiß auf. Nach einer gewissen Laufzeit des Motors werden die Rückschlagventile beispielsweise aufgrund von Schmutzablagerungen, Verbrennungsrückständen und mechanischem Verschleiß beschädigt. Oft werden Rückschlagventile infolgedessen undicht, und wenn ein Rückschlagventil leckt, können heiße und aggressive Verbrennungsgase in die Gaszufuhrleitung zurückströmen und andere Bauteile beschädigen.

Oft zieht ein undichtes Rückschlagventil zudem einen unregelmäßigen Motorlauf und einen erhöhten Brenngasverbrauch nach sich. Läuft aber ein Gasmotor erst einmal unregelmäßig, ist es häufig zeitaufwendig, um die Ursache dafür abzuklären. Insbesondere bei Gasmotoren mit einer größeren Anzahl an Zylindern und Rückschlagventilen kostet es viel Zeit, um abzuklären, ob eines der zahlreichen Rückschlagventile defekt ist. Der mit der Identifikation eines defekten Rückschlagventils verbundene Aufwand macht die Wartung eines Gasmotors aufwendig und teuer. Der zeitliche Wartungsaufwand und damit die für die Wartung anfallenden Kosten steigen außerdem mit der Anzahl an Zylindern eines Gasmotors.

Aus der DE 10 2007 002 752 A1 ist ein Verfahren zur Überwachung einer Brennstoffversorgungsanlage eines Fahrzeugs bekannt, welches dafür vorgesehen ist, zu erkennen, wenn ein Ventil in der Brennstoffversorgungsanlage defekt ist. Nach dem bekannten Verfahren werden in einem Abschnitt einer Brennstoffzufuhrleitung zwischen einem Brennstoffspeicher und einem Brennstoffverbraucher - also beispielsweise einer Vorkammer - der Brennstoffdruck und die Brennstofftemperatur erfasst, und es wird ein Fehlersignal erzeugt, und die Brennstoffversorgung wird unterbrochen, wenn während einer vorgegebener Zeitdauer eine Änderung der Brennstoffdruckes einen vorgegebenen Wert übersteigt.

Mittels des bekannten Verfahrens kann zwar erkannt werden, wenn ein Rückschlagventil defekt ist, das bekannte Verfahren erlaubt es jedoch nicht, den mit der Identifikation eines defekten Rückschlagventils verbundenen Aufwand bei der Wartung des Gasmotors zu vermeiden. Da zudem, damit das bekannte Verfahren überhaupt durchgeführt werden kann, sowohl ein Drucksensor als auch ein Temperatursensor im Bereich der Gaszufuhrleitungen verbaut werden müssen, ist eine Implementierung des bekannten Verfahrens relativ teuer und aufwendig.

Es ist daher Aufgabe der vorliegenden Erfindung, ein Verfahren zur Überwachung von Rückschlagventilen eines Gasmotors zu schaffen, welches erlaubt, den mit der Identifikation eines defekten Rückschlagventils verbundenen Aufwand bei der Wartung zu reduzieren, und welches sich zudem kostengünstig implementieren lässt. Insbesondere soll sich das erfindungsgemäße Verfahren durchführen lassen, ohne, dass als Voraussetzung hierfür aufwendige Vorrichtungen an einem Gasmotor verbaut werden müssen.
Die Erfindung löst diese Aufgabe mit den Merkmalen nach dem Anspruch 1. Vorteilhafte Ausgestaltungen sind in weiteren Ansprüchen beschrieben. Die Verwendung des Verfahrens ist im Anspruch 7 beschrieben. Nach dem erfindungsgemäßen Verfahren wird vorgeschlagen, in Gaszufuhrleitungen eines Gasmotors angeordnete Rückschlagventile mittels Erfassung einer Temperatur zu überwachen und einen Signalgeber zu aktivieren, wenn eine erfasste Temperatur in einer Gaszufuhrleitung außerhalb eines vorgegebenen ersten Sollbereichs liegt. Es wird dazu vorgeschlagen, ein Signal mit der Information auszugeben, in welcher Gaszufuhrleitung die außerhalb des ersten Sollbereichs liegende Temperatur erfasst wurde und/oder welchem Zylinder die Gaszufuhrleitung zugeordnet ist. Die Terminologie "vorgegebener erster Sollbereich" wurde zur Abgrenzung von einem nachstehend, bei der Beschreibung einer Weiterbildung des Verfahrens eingeführten "vorgegebenen zweiten Sollbereich" gewählt.
Der vorgegebene erste Sollbereich für die Temperatur stellt einen Wertebereich dar, wie hoch die Temperatur in der Gaszufuhrleitung sein sollte, wenn das in der Gaszufuhrleitung angeordnete Rückschlagventil einwandfrei funktioniert. Dieser Sollbereich kann für alle Gaszufuhrleitungen identisch vorgegeben werden, oder der vorgegebene erste Sollbereich kann für jede Gaszufuhrleitung individuell vorgegeben werden. Letzteres ist beispielsweise dann von Vorteil, wenn Gaszufuhrleitungen zu zwei Brennräumen eines Gasmotors unterschiedliche Temperaturen haben dürfen.

Das erfindungsgemäße Verfahren lässt sich einerseits zur Überwachung von Rückschlagventilen eines Gasmotors mit nur einem Zylinder, aber mit mehreren Gaszufuhrleitungen benutzen. Andererseits lässt es sich auch zur Überwachung eines Mehrzylindermotors benutzen, wobei jeder Zylinder eine oder mehrere Gaszufuhrleitungen aufweisen kann. Mittels des erfindungsgemäßen Verfahrens lassen sich mit anderen Worten sowohl mehrere Rückschlagventile überwachen, die in verschiedenen, aber alle zu derselben Vorkammer führenden Gaszufuhrleitungen angeordnet sind, als auch Rückschlagventile, die in Gaszufuhrleitungen angeordnet sind, welche teilweise oder alle zu unterschiedlichen Vorkammern führen.

Das erfindungsgemäße Verfahren umfasst außerdem Ausführungsformen, gemäß denen ein Signal des aktivierten Signalgebers die Information umfasst, in welcher Gaszufuhrleitung die außerhalb des ersten Sollbereichs liegende Temperatur erfasst wurde. Aus dieser Information geht auch hervor, welches Rückschlagventil defekt ist.

Das Signal kann stattdessen oder zusätzlich auch die Information umfassen, zu welchem Zylinder diejenige Gaszufuhrleitung führt, in welcher die außerhalb des ersten Sollbereichs liegende Temperatur erfasst wurde. Diese Information ist vor allem dann nützlich, wenn das Verfahren zur Überwachung von Rückschlagventilen eines Mehrzylindergasmotors eingesetzt wird. Es sei an dieser Stelle darauf hingewiesen, dass sich die beiden vorstehend genannten Informationen dann unterscheiden, wenn mehrere Gaszufuhrleitungen eines Gasmotors zu einem Zylinder führen.

Die Temperatur wird gemäß einer bevorzugten Ausführungsform in einem zu einem Rückschlagventil benachbart liegenden Abschnitt einer Gaszufuhrleitung oder in einem zu einem Gasventil benachbart liegenden Abschnitt erfasst. Unter dem Gasventil ist an dieser Stelle ein zur Dosierung der die Gaszufuhrleitung maximal durchströmenden Brenngasmenge ausgebildetes Ventil - beispielsweise ein elektrisch betätigtes Gasventil - zu verstehen.

Die Erfindung umfasst außerdem auch Ausführungsformen, gemäß denen in beiden der genannten Abschnitte der Gaszufuhrleitung eine Temperatur erfasst wird. Eine zur Erfassung der Temperatur ausgebildete Vorrichtung kann zudem jeweils innerhalb der Gaszufuhrleitung oder direkt benachbart zur Gaszufuhrleitung angeordnet sein.

Der zum Rückschlagventil benachbart liegende Abschnitt befindet sich hinsichtlich des Rückschlagventils auf der von der Vorkammer abgewandten Seite. Ein Defekt des Rückschlagventils wirkt sich besonders stark auf die Temperatur in diesem Abschnitt aus, und eine Messung in diesem Abschnitt ist daher besonders aussagekräftig.

Gemäß einer Weiterbildung des erfindungsgemäßen Verfahrens wird der Gasmotor außerdem ausgeschaltet, wenn die erfasste Temperatur in einer Gaszufuhrleitung außerhalb eines vorgegebenen zweiten Sollbereichs liegt. Der erste und der zweite vorgegebene Sollbereich können zudem identisch oder voneinander abweichend gewählt werden. Vorzugsweise wird der zweite Sollbereich größer gewählt als der erste Sollbereich.

Liegt die erfasste Temperatur nur außerhalb des ersten Sollbereichs, wird der Signalgeber aktiviert, der Motor aber noch nicht ausgeschaltet. Liegt die Temperatur jedoch auch außerhalb des zweiten Sollbereichs, so wird nicht nur der Signalgeber aktiviert, sondern zusätzlich auch der Motor ausgeschaltet. Dadurch lässt sich einerseits vermeiden, dass der Motor unnötigerweise abgeschaltet wird, wenn zwar ein defektes Rückschlagventil identifiziert wurde, die Temperaturabweichung in der Gaszufuhrleitung aber unbedenklich ist, so dass bei einem vorläufigen Weiterbetrieb des Motors keine Schäden an weiteren Bauteilen befürchtet werden müssen, beispielsweise ein schleichender Defekt des Rückschlagventils vorliegt. Andererseits lässt sich sicherstellen, dass der Motor hingegen sofort abgeschaltet wird, wenn die Temperaturabweichung in der Gaszufuhrleitung über den undenklichen Wert ansteigt.

Gemäß einer Weiterbildung der Erfindung werden der erste und/oder der zweite Sollbereich der Temperatur in einer Gaszufuhrleitung in Abhängigkeit der Betriebsdauer des Gasmotors, des Lastzustands des Gasmotors, oder eines Druck in einem Brennraum oder in einer Gaszufuhrleitung vorgegeben.

Die in einer Gaszufuhrleitung vorherrschende Temperatur ist unter anderem eine Funktion der Betriebsdauer. Wird ein Motor kalt gestartet, so sind der Brennraum und die Vorkammer noch kalt, läuft der Motor hingegen bereits länger, ist der Brennraum heiß. Die in der Vorkammer vorherrschende Temperatur wirkt sich auch auf die Temperatur in der Gaszufuhrleitung aus. Um dieser Abhängigkeit der Temperatur von der Betriebsdauer Rechnung zu tragen, können der erste und/oder der zweite Sollbereich der Temperatur in Abhängigkeit der Betriebsdauer vorgegeben werden.

Wird ein Gasmotor bei verschiedenen Lastzuständen betrieben, so treten auch verschiedene Druck- und Temperaturverläufe im Hauptbrennraum und in der Vorkammer auf. Um dieser Abhängigkeit Rechnung zu tragen, können der erste und/oder der zweite Sollbereich für die Temperatur auch in Abhängigkeit des Lastzustands vorgegeben werden.

Der erste Sollbereich und/oder der zweite Sollbereich können außerdem auch in Abhängigkeit eines Drucks vorgegeben werden, beispielsweise in Abhängigkeit von dem in einem Brennraum vorherrschenden Mitteldruck. Verändert sich die Zusammensetzung des im Gasmotor verwendeten Brenngases, so ist es auch zu erwarten, dass sich die Temperatur in den Brennräumen sowie in den Gaszufuhrleitungen verändert. Diese Abhängigkeit wird berücksichtigt, indem der erste und/oder der zweite Sollbereich der Temperatur beispielsweise in Abhängigkeit des im Brennraum vorherrschenden Mitteldrucks vorgegeben werden.

Eine weitere Möglichkeit besteht darin, den ersten und/oder zweiten Sollbereich in Abhängigkeit von dem in einer Gaszufuhrleitung vorherrschenden Druck vorzugeben. Wenn eine andere Brenngaszusammensetzung verwendet wird, kann für eine optimale Verbrennung auch ein anderer Druck in der Gaszufuhrleitung notwendig sein. Der Druck in der Gaszufuhrleitung kann also als Indiz für das verwendete Brenngas angesehen werden, und der Sollbereich kann auf diesen Druck entsprechend abgestimmt werden.

Gemäß einer Weiterbildung des erfindungsgemäßen Verfahrens wird der Signalgeber erst dann aktiviert, wenn die erfasste Temperatur während einer vorgegebenen ersten Zeitdauer außerhalb des vorgegebenen ersten Sollbereichs liegt. Dadurch lässt sich beispielsweise vermeiden, dass ein Messfehler bei der Erfassung der Temperatur oder eine kurzzeitige, temporär auftretende Abweichung der Temperatur in der Gaszufuhrleitung, welche nicht auf einen Defekt eines Rückschlagventils zurückzuführen ist, bereits ein Signal des Signalgebers auslöst.

Damit ein Messfehler oder eine kurzzeitige, temporär auftretende Abweichung der Temperatur ebenfalls kein unnötiges Ausschalten des Motors auslöst, wird der Gasmotor vorzugsweise auch erst dann ausgeschaltet, wenn die erfasste Temperatur während einer vorgegebenen zweiten Zeitdauer außerhalb des vorgegebenen zweiten Sollbereichs liegt. Die vorgegebene erste und die vorgegebene zweite Zeitdauer können zudem identisch sein oder voneinander abweichen.

Das erfindungsgemäße Verfahren lässt sich zur zylinderspezifischen und/oder Rückschlagventil-spezifischen Überwachung von Rückschlagventilen verwenden. Unter zylinderspezifischer Überwachung ist eine Ausführungsform des Verfahrens zu verstehen, gemäß der dem Anwender des Verfahrens die Information ausgegeben wird, welchem Zylinder die Gaszufuhrleitung zugeordnet ist, in der eine Temperatur erfasst wurde, die außerhalb des ersten und/oder zweiten Sollbereichs liegt.

Unter Rückschlagventil-spezifischer Überwachung ist eine Ausführungsform des Verfahrens zu verstehen, gemäß der dem Anwender des Verfahrens die Information ausgegeben wird, in welcher Gaszufuhrleitung die Temperatur erfasst wurde, welche außerhalb des ersten und/oder des zweiten Sollbereichs liegt. Die Rückschlagventil-spezifische Überwachung eignet sich besonders zur Verwendung bei Motoren mit Zylindern, die mehrere Gaszufuhrleitungen aufweisen. Das Verfahren eignet sich sowohl für Motoren mit nur einem Zylinder und mehreren Gaszufuhrleitungen, als auch für Motoren mit mehreren Zylindern, welche jeweils eine oder mehrere Gaszufuhrleitungen aufweisen.

Ein Gasmotor, der für die Verwendung des Verfahrens vorteilhaft ausgebildet ist, weist wenigstens eine Vorkammer und wenigstens einen zur Erfassung einer Temperatur ausgebildeten Sensor auf, wobei dieser Sensor in einer mit einem Rückschlagventil ausgestatteten Gaszufuhrleitung zu einer Vorkammer angeordnet ist.

Der Sensor kann beispielsweise entweder benachbart zu dem Rückschlagventil oder benachbart zu einem in der Gaszufuhrleitung angeordneten Gasventil angeordnet sein. Zudem kann in einer einzigen Gaszufuhrleitung auch sowohl benachbart zum Rückschlagventil als auch benachbart zum Gasventil ein zur Erfassung einer Temperatur ausgebildeter Sensor angeordnet sein.

Die Erfindung wird nachstehend anhand der beigefügten Zeichnungen beispielhaft näher erläutert. Es zeigen:
- Fig. 1: ein Blockschaltbild einer Ausführungsform des erfindungsgemäßen Verfahrens;
- Fig. 2a: eine schematische Darstellung eines Teilbereichs einer ersten Ausführungsform eines für die Verwendung des Verfahrens vorteilhaft ausgebildeten Gasmotors; und
- Fig. 2b: eine schematische Darstellung eines Teilbereichs einer zweiten Ausführungsform eines für die Verwendung des Verfahrens vorteilhaft ausgebildeten Gasmotors.

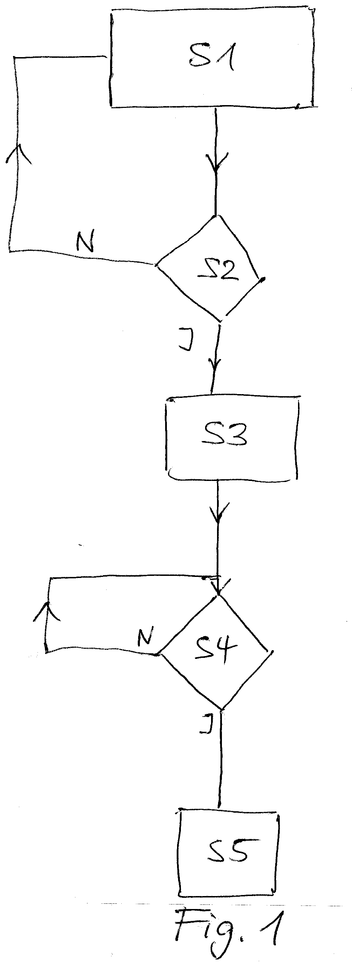

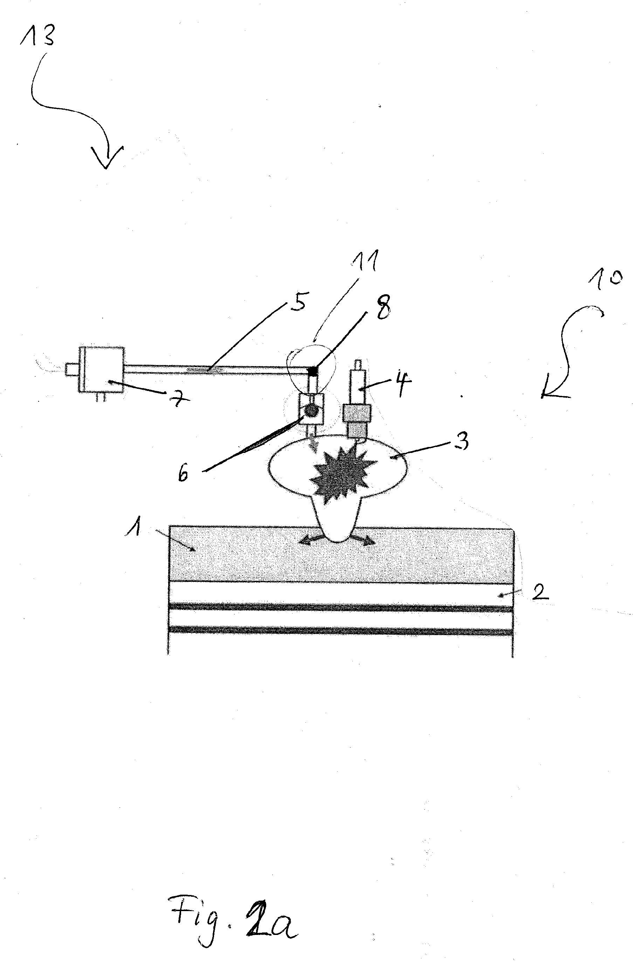

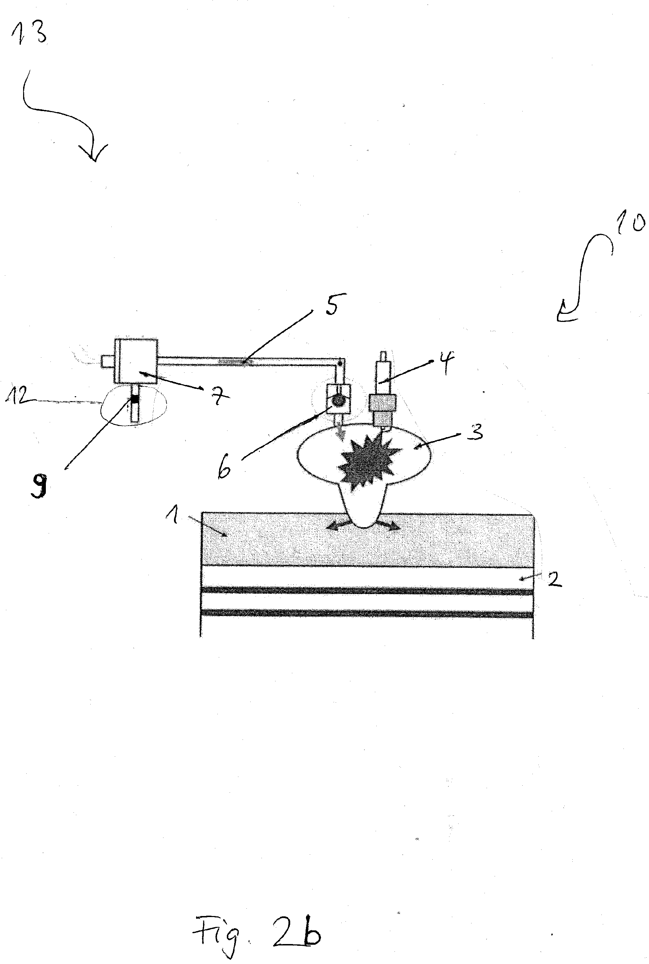

Fig. 1 zeigt ein Blockschaltbild einer Ausführungsform des erfindungsgemäßen Verfahrens. Zur Erklärung des Verfahrens wird im Folgenden auch auf den in Fig. 2a und 2b lediglich schematisch dargestellten Gasmotor 13 Bezug genommen, der einen Zylinder eines nicht näher dargestellten, stationär betriebenen Großgasmotor mit mehreren Zylindern und mit Vorkammerzündung zeigt, wobei jeder Zylinder eine Vorkammer mit zwei Gaszufuhrleitungen aufweist.

Der erste Zylinder - "Zylinder A" - weist beispielsweise zwei Gaszufuhrleitungen "Leitung A1" und "Leitung A2" auf, der zweite Zylinder - "Zylinder B" - weist Gaszufuhrleitungen "Leitung B1" und "Leitung B2" auf, und so weiter. In jeder Gaszufuhrleitung ist ein Rückschlagventil angeordnet, insgesamt weist der Gasmotor also eine der Zylinderzahl entsprechende Zahl an Rückschlagventilen auf.

In einem ersten Schritt S1 wird in allen Gaszufuhrleitungen des Motors eine Temperatur festgestellt. Für jede der Gaszufuhrleitungen ist ein erster Sollbereich für die Temperatur vorgegeben. Bei der dargestellten Ausführungsform des Verfahrens ist der vorgegebene erste Sollbereich für alle Gaszufuhrleitungen identisch.

In einem Schritt S2 wird für jede einzelne der erfassten Temperaturen ermittelt, ob diese während einer vorgegebenen ersten Zeitdauer außerhalb des vorgegebenen ersten Sollbereichs liegt. Bei der dargestellten Ausführungsform beträgt die vorgegebene erste Zeitdauer zum Beispiel eine Minute. Ist dies für alle erfassten Temperaturen nicht der Fall, ist davon auszugehen, dass alle Rückschlagventile einwandfrei funktionieren. Es wird in diesem Fall zum Schritt S1 zurückgekehrt, und die Temperaturen in den Gaszufuhrleitungen werden beispielsweise in einem vorbestimmten zeitlichen Abstand zur ersten Erfassung erneut erfasst.

Wird im Schritt S2 hingegen festgestellt, dass wenigstens eine der erfassten Temperaturen während der vorgegebenen ersten Zeitdauer außerhalb des vorgegebenen ersten Sollbereichs liegt, wird zu einem weiteren Schritt S3 übergegangen. Es wird im Folgenden - lediglich der Erläuterung halber - angenommen, dass in der ersten Gaszufuhrleitung des zweiten Zylinders, also in "Leitung B1", eine außerhalb des vorgegebenen ersten Sollbereichs liegende Temperatur erfasst wurde. Das Rückschlagventil in "Leitung B1" ist demnach defekt.

Im Schritt S3 wird ein Signalgeber aktiviert, welcher ein Signal mit der Information ausgibt, in welcher Gaszufuhrleitung die außerhalb des Sollbereichs liegende Temperatur erfasst wurde, und die zusätzlich die Information ausgibt, welchem Zylinder diese Gaszufuhrleitung zugeordnet ist. Im beispielhaft aufgeführten Fall wird vom aktivierten Signalgeber die Information, dass ein Rückschlagventil beim Zylinder "B" ausgefallen ist, und dass es sich um die Gaszufuhrleitung "B1" handelt, ausgegeben.

In einem nächsten Schritt S4 wird überprüft, ob die erfasste Temperatur, welche außerhalb des vorgegebenen ersten Sollbereichs liegt, während einer vorgegebenen zweiten Zeitdauer - bei der dargestellten Ausführungsform des Verfahrens wiederum eine Minute - auch außerhalb eines vorgegebenen zweiten Sollbereichs liegt. Ist dies nicht der Fall, läuft der Gasmotor weiter, und der Schritt S4 wird aufs Neue durchgeführt. In diesem Fall muss ein Benutzer des Motors selbst entscheiden, wann er eine Wartung durchführt. Der Benutzer erhält also einen Hinweis, dass das Rückschlagventil in der Gaszufuhrleitung B1 angefangen hat, fehlerhaft zu arbeiten, aber noch weiter betrieben werden kann. Für die Wartung kann der Benutzer einen günstigen Zeitpunkt abwarten.

Wird im Schritt S4 hingegen festgestellt, dass die erfasste Temperatur außerhalb des vorgegebenen zweiten Sollbereichs liegt, wird zu einem Schritt S5 übergegangen. Im Schritt S5 wird der Motor ausgeschaltet.

Wurde ein defektes Rückschlagventil identifiziert, und wird der Motor anschließend gewartet, kann das defekte Rückschlagventil direkt ersetzt werden, ohne dass alle Rückschlagventile nach einem Defekt abgesucht werden müssen. Ist das defekte Rückschlagventil ersetzt, und wird der Motor wieder in Betrieb genommen, so kann das Verfahren wieder von Schritt S1 ausgehend durchgeführt werden.

In den Fig. 2a und 2b sind schematische Darstellungen von Teilbereichen zweier Ausführungsformen eines Gasmotors 13, der vorteilhaft für die Verwendung des Verfahrens ausgebildet ist, gezeigt. Die beiden Gasmotoren 13 unterscheiden sich lediglich darin, wo eine Vorrichtung zum Erfassen der Temperatur in einer Gaszufuhrleitung angeordnet ist. Fig. 2a und 2b zeigen jeweils einen Teil eines Zylinders 10 mit einem Hauptbrennraum 1, einem Kolben 2 sowie einer Vorkammer 3. Die Vorkammer 3 weist zudem eine Zündkerze 4 und eine Gaszufuhrleitung 5 auf. In der Gaszufuhrleitung 5 ist weiterhin, benachbart zu der Vorkammer 3, ein Rückschlagventil 6 angeordnet, und in einem von der Vorkammer 3 weiter entfernt liegenden Bereich der Gaszufuhrleitung 5 ist ein Gasventil 7 angeordnet.

Bei der in Fig. 2a dargestellten Ausführungsform ist ein Thermoelement 8 zur Erfassung einer Temperatur in einem zum Rückschlagventil 6 benachbart liegenden Abschnitt 11 der Gaszufuhrleitung 5 angeordnet. Bei der in Fig. 2b dargestellten Ausführungsform ist hingegen ein Thermoelement 9 zur Erfassung einer Temperatur in einem zum Gasventil 7 benachbart liegenden Abschnitt 12 der Gaszufuhrleitung 5 angeordnet. Hinsichtlich der mit der jeweiligen Anordnung des Thermoelements 8, 9 verbundenen Vorteile wird auf vorstehende Beschreibung verwiesen.

Hinsichtlich vorstehend im Einzelnen nicht näher erläuterter Merkmale der Erfindung wird im Übrigen ausdrücklich auf die Patentansprüche und die Zeichnungen verwiesen.

### Bezugszeichenliste

- 1: Hauptbrennraum
- 2: Kolben
- 3: Vorkammer
- 4: Zündkerze
- 5: Gaszufuhrleitung
- 6: Rückschlagventil
- 7: Gasventil
- 8: Thermoelement
- 9: Thermoelement
- 10: Zylinder
- 11: Abschnitt einer Gaszufuhrleitung
- 12: Abschnitt einer Gaszufuhrleitung
- 13: Gasmotor

## Patentansprüche

1. Verfahren zur Überwachung von in Gaszufuhrleitungen (5) eines Gasmotors (13) angeordneten Rückschlagventilen (6) mechanischer oder elektronischer Art mittels Erfassung einer Temperatur (S1), wobei nach dem Verfahren ein Signalgeber aktiviert wird (S3), wenn eine erfasste Temperatur in einer Gaszufuhrleitung (5) außerhalb eines vorgegebenen ersten Sollbereichs liegt, **dadurch gekennzeichnet, dass** ein Signal mit der Information ausgegeben wird (S3), in welcher Gaszufuhrleitung (5) die außerhalb des ersten Sollbereichs liegende Temperatur erfasst wurde und/oder welchem Zylinder (10) des Gasmotors (13) die Gaszufuhrleitung (5) zugeordnet ist.

2. Verfahren nach Anspruch 1, **dadurch gekennzeichnet, dass** die Temperatur in einem zu einem Rückschlagventil (5) benachbart liegenden Abschnitt (11) einer Gaszufuhrleitung oder in einem zu einem Gasventil (7) benachbart liegenden Abschnitt (12) erfasst wird.

3. Verfahren nach Anspruch 1 oder 2, **dadurch gekennzeichnet, dass** der Gasmotor ausgeschaltet wird (S5), wenn die erfasste Temperatur in einer Gaszufuhrleitung (5) außerhalb eines vorgegebenen zweiten Sollbereichs liegt.

4. Verfahren nach einem der vorstehenden Ansprüche, **dadurch gekennzeichnet, dass** der erste und/oder der zweite Sollbereich der Temperatur in einer Gaszufuhrleitung (5) in Abhängigkeit einer Betriebsdauer und/oder eines Lastzustands des Gasmotors und/oder eines Drucks vorgegeben wird.

5. Verfahren nach einem der vorstehenden Ansprüche, **dadurch gekennzeichnet, dass** der Signalgeber aktiviert wird (S3), wenn die erfasste Temperatur während einer vorgegebenen ersten Zeitdauer außerhalb des vorgegebenen ersten Sollbereichs liegt.

6. Verfahren nach einem der vorstehenden Ansprüche, **dadurch gekennzeichnet, dass** der Motor ausgeschaltet wird (S5), wenn die erfasste Temperatur während einer vorgegebenen zweiten Zeitdauer außerhalb des vorgegebenen zweiten Sollbereichs liegt.

7. Verwendung des Verfahrens nach einem der vorstehenden Ansprüche zur zylinderspezifischen und/oder Rückschlagventil-spezifischen Überwachung von Rückschlagventilen (5) mechanischer oder elektronischer Art.

## Claims

1. Method for monitoring mechanical or electronic non-return valves (6) arranged in gas supply lines (5) of a gas motor (13) by means of detecting a temperature (S1), wherein according to the method, a signal transmitter is activated (S3) when a detected temperature in a gas supply line (5) lies outside of a predefined first desired range, **characterized in that** the signal is output (S3) with the information indicating the gas supply line (5) in which the temperature lying outside of the first desired range was detected and/or the cylinder (10) of the gas motor (13) with which the gas supply line (5) is associated.

2. The method according to claim 1, **characterized in that** the temperature is detected in a portion (11) of a gas supply line located adjacent to a non-return valve (5) or in a portion (12) located adjacent to a gas valve (7) .

3. The method according to claim 1 or 2, **characterized in that** the gas motor is switched off (S5) when the detected temperature in a gas supply line (5) lies outside of a predefined second desired range.

4. The method according to one of the preceding claims, **characterized in that** the first and/or the second desired range of the temperature in a gas supply line (5) is specified as a function of an operating duration and/or a load state of the gas motor and/or a pressure.

5. The method according to one of the preceding claims, **characterized in that** the signal transmitter is activated (S3) when the detected temperature lies outside of the predefined first desired range over a predefined first time period.

6. The method according to one of the preceding claims, **characterized in that** the motor is switched off (S5) when the detected temperature lies outside the predefined first desired range over a predefined second time period.

7. Use of the method according to one of the preceding claims for cylinder-specific and/or non-return valve specific monitoring of mechanical or electronic non-return valves (5).

## Revendications

1. Procédé, destiné à superviser des clapets anti-retour (6) de type mécanique ou électronique placés dans des conduits d'alimentation de gaz (5) d'un moteur à gaz (13) par détection d'une température (S1), après le procédé, un générateur de signaux étant activé (S3) si une température détectée dans un conduit d'alimentation de gaz (5) se situe hors d'une première plage de consigne prédéfinie, **caractérisé en ce qu'**un signal est délivré (S3) avec l'information dans quel conduit d'alimentation de gaz (5) la température située hors de la première plage de consigne a été détectée et/ou à quel cylindre (10) du moteur à gaz (13) le conduit d'alimentation de gaz (5) est associé.

2. Procédé selon la revendication 1, **caractérisé en ce que** la température est détectée dans un tronçon (11) d'un conduit d'alimentation de gaz situé au voisinage du clapet anti-retour (5) ou dans un tronçon (12) situé au voisinage d'une soupape à gaz (7).

3. Procédé selon la revendication 1 ou 2, **caractérisé en ce que** le moteur à gaz se coupe (S5), si la température détectée dans un conduit d'alimentation de gaz (5) se situe hors d'une deuxième plage de consigne prédéfinie.

4. Procédé selon l'une quelconque des revendications précédentes, **caractérisé en ce que** la première et/ou la deuxième plage de consigne de température dans un conduit d'alimentation de gaz (5) est prédéfinie en fonction d'une durée de fonctionnement et/ou d'un état de charge du moteur à gaz et/ou d'une pression.

5. Procédé selon l'une quelconque des revendications précédentes, **caractérisé en ce que** le générateur de signaux est activé (S3) si la température détectée pendant une première période prédéfinie se situe hors de la première plage de consigne prédéfinie.

6. Procédé selon l'une quelconque des revendications précédentes, **caractérisé en ce que** le moteur se coupe (S5) si la température détectée pendant une deuxième période prédéfinie se situe hors de la deuxième plage de consigne prédéfinie.

7. Utilisation du procédé selon l'une quelconque des revendications précédentes pour la supervision spécifique au cylindre et/ou spécifique au clapet anti-retour de clapets anti-retour (5) de type mécanique ou électronique.
